# EUROPÄISCHE PATENTSCHRIFT

(11) **EP 1 468 598 B1**
(45) Veröffentlichungstag und Bekanntmachung des Hinweises auf die Patenterteilung: **19.12.2012**
(21) Anmeldenummer: 04008212.5
(22) Anmeldetag: 05.04.2004
(51) Int. Cl.: A01D 43/00, A01B 51/02

(54) **Feldhäcksler mit positionierbarer Fahrerkabine**
Forage harvester with positionable driver's cab
Ramasseuse-hacheuse avec cabine du conducteur apte à être positionnée

(30) Priorität: 16.04.2003 DE 10317816
(43) Veröffentlichungstag der Anmeldung: 20.10.2004
(73) Patentinhaber: CLAAS Selbstfahrende Erntemaschinen GmbH, 33428 Harsewinkel (DE)
(72) Erfinder: Erdmann, Hubert, 33739 Bielefeld (DE); Deppe, Markus, 33739 Bielefeld (DE)

(56) Entgegenhaltungen:
- DE-A1- 1 949 978
- DE-A1- 3 234 657
- DE-A1- 3 346 309
- DE-A1- 19 958 280
- DE-U- 7 531 578
- DE-U1- 20 007 994

## Beschreibung

Die Erfindung betrifft einen selbstfahrenden Feldhäcksler nach dem Oberbegriff des Anspruchs 1, bekannt beispielsweise aus DE 3234657. Selbstfahrende Fahrzeuge mit positionierbarer Fahrerkabine sind aus der DE-OS 2 046 552 bekannt. Bei einer erfndungsgemäßen Ausführungsform dieser Fahrzeuge ist die Fahrerkabine drehbar auf einem Arm und horizontal schwenkbar um eine Gelenkachse angebracht und kann in mindestens zwei Lagen verstellt werden. Die Fahrgestelle der Fahrzeuge sind mit Vorrichtungen zum Ankuppeln oder zur Aufnahme von Arbeitsorganen ausgerüstet. Vor der Aufnahme eines Arbeitsorgans wird die Fahrerkabine aus dem benötigten Einbauraum für das Arbeitsorgan in eine Lage geschwenkt, die die Fahrerkabine zum Fahrgestell ausrichtet und oder eine optimale Sicht des Fahrers in Fahrtrichtung bzw. auf das Arbeitsorgan bietet. Nachteilig bei derartigen Ausführungsformen ist, dass die Fahrerkabine nicht um die angekoppelten Arbeitsorgane herum In eine entgegengesetzte Lage lageveränderbar ist.

Moderne Feldhäcksler fahren auf der Straße bis zu 40 km/h schnell. Mit angekoppeltem Werkzeug ist die Last auf der Vorderachse im Vergleich zur Last auf der Hinterachse sehr hoch, der Schwerpunkt der Feldhäcksler liegt sehr nah an der Vorderachse und ist durch die Anordnung des Antriebes auch sehr welt entfernt vom Boden. Bei dieser Gewichtsvertellung neigen die Fahrzeuge beim Beschleunigen bzw. Bremsen leicht zum Schwingen bzw. Schaukeln. Die auf Lenkeinschläge und Fahrbahnunebenheiten empfindlich reagierenden Fahrzeuge sind bei hohen Geschwindigkeiten nur schwer zu beherrschen. Die unglelchmäßlge Lastverteilung wird durch Ballast ausgeglichen, der am Traggestell Im Bereich der Hinterachse befestigt wird. Nachteilig hierbei ist, dass das Gesamtgewicht des Feldhäckslers erhöht und gleichzeitig die Nutzlast gesenkt wird.

Der Erfindung liegt die Aufgabe zugrunde die Fahreigenschaften und damit den Fahrkomfort des Feldhäcksiers an unterschiedliche Betriebssituationen auf der Straße und auf dem Feld mit und ohne angekoppeltem Vorsatzgerät anzupassen und damit zu verbessern.

Erfindungsgemäß wird diese Aufgabe durch die in Patentanspruch 1 genannten Merkmale gelöst. Weitere vorteilhafte Ausführungen des Erfindungsgegenstandes ergeben sich aus den übrigen Ansprüchen.

Indem die Fahrerkabine aus zumindest einer Straßenbetriebposition In zumindest eine Häckselbetriebposition und umgekehrt bewegbar ist und die Kabine bei Änderung der Straßenbetriebposition in die Häckselbetriebposition und umgekehrt eine Arbeitsorgananordnung umgreiff, wird sichergestellt dass der Feldhäcksler in zwei Fahrtrichtungen betrieben werden kann und der Fahrer freie Sicht nach vorne in die jeweilige Fahrtrichtung hat. Erfindungsgemäβ antspricht dabei

Arbeitsorgananordnung dem Auswurfschacht.

Die Änderung der Position erfolgt vorzugswelse durch verschieben und/oder verschwenken der Kabine. Die Kabine Ist dabei in jeder Position mit dem Fahrgestell verbunden.

Um eine hohe Flexibilität in der Lageänderung zu erreichen, kann die Schwenkvorrichtung mit einem längenveränderlichen Schwenkarm ausgestattet sein, damit die Kabine in Bezug auf die Achseinheiten verschiebbar ist.

Bel einem bevorzugten Ausführungsbeispiel weist die Schwenkvorrichtung eine Drehachse auf, die außerhalb des Auswurfschachtes angeordnet ist, so dass die Schwenkvorrichtung teilweise um den Auswurfschacht herum drehen kann, ohne den Auswurfschacht zu berühren.

Indem am Fahrgestell zwei Aufstiege angebracht sind, die sich an gegenüberliegenden Seiten am Fahrgestell befinden, kann der Fahrer die Fahrerkabine in der Häckselbetriebposition und in der Straßenbetriebsposition bequem und sicher erreichen.

In einer vorteilhaften Weiterbildung der Erfindung ist der Auswurfkrümmer ist um eine horizontale Achse höhenverschwenkbar, damit er im Straßenbetrieb abgesenkt werden kann und beim Häckselbetrieb das Häckselgut zur Überladung verschieden hoch und weit umlenkt.

Konstruktiv einfach und Kollisionen ausschließend ist eine Variante, bei der die Fahrerkabine und der Auswurfkrümmer nur gleichsinnig in verschiedene Positionen um den Auswurfschacht bewegbar sein können.

Um die Gefahr der Kollision zwischen der verschwenkbaren Fahrerkabine und dem lageveränderlichen Auswurfkrümmer zu vermeiden, sind die Bewegungen von Fahrerkabine und Auswurfkrümmer vorteilhafterweise miteinander gekoppelt.

In vorteilhafter Weiterentwicklung der Erfindung wird die Bewegung des Auswurfkrümmers durch Anschläge begrenzt. Damit wird sichergestellt, dass einerseits ein flexibel gestaltbarer Überladebereich überstrichen werden kann und andererseits Kollisionen mit weiteren Baugruppen vermieden werden.

Die Fahrerkabine ist in der Straßenbetriebposition vorteilhafterweise etwa mittig zwischen den Achseinheiten angeordnet. In dieser Position sind die auf den Fahrer wirkenden Schwingungen gemindert.

Eine weitere vorteilhafte Ausgestaltung der Erfindung ergibt sich dann, wenn die Fahrerkabine heben dem Auswurfschacht angeordnet ist. Dem Fahrer bietet sich in dieser Position die beste Sicht auf den Auswurfkrümmer.

Alternativ kann die Fahrerkabine verschieblich auf einer Verschiebeführung befestigt und dabei gleichzeitig um eine vertikale Achse schwenkbar gelagert sein. In diesem Fall ist es möglich, dass die Kabine sich vollständig um den Auswurfschacht bewegen kann.

Bei einer Ausführung der Verschiebeführung sind die Drehachse des Auswurfkrümmers und der Bewegungsmittelpunkt der Verschiebeführung koaxial. Der Auswurfkrümmer und die Kabine bewegen sich vorteilhafterweise um ein gemeinsames Zentrum.

Bei der vorgenannten Variante ist zwischen der Verschiebeführung und der Fahrerkabine vorzugsweise ein Gelenkarm angelenkt, um eine hohe Flexibilität in der Lageänderung zu ermöglichen.

Zur gleichmäßigen Verteilung der Lasten des Häckslers sind die Funktionsbaugruppen und/oder das Vorsatzgerät im Bereich der ersten Achseinheit an dem Fahrgestell angebracht und gleichzeitig ist die Antriebseinheit im Bereich einer weiteren Achseinheit angeordnet. Diese Anordnung wirkt sich positiv auf den Fahrkomfort aus, da sie eine vorteilhafte Gewichtsverteilung am Feldhäcksler bedingt. Der Schwerpunkt der Antriebseinheit liegt in der Nähe der weiteren Achseinheit, sodass der Feldhäcksler auch in Hanglage kippsicher fährt.

Bei einem bevorzugtem Ausführungsbeispiel ist die Funktionsbaugruppe von einem Einzugschacht und dem Auswurfschacht gebildet.

In der Weiterentwicklung dieses Ausführungsbeispiels nimmt der Auswurfschacht mehrere Arbeitsorgane auf. Die Arbeitsorgane können bei dieser erfindungsgemäßen Ausführung die Häckseltrommel, der Corn-Cracker und der Nachbeschleuniger sein.

In weitere Ausgestaltung dieses Ausführungsbeispieles nimmt der Einzugschacht mehrere Vorpresswalzen auf.

Die Antriebseinheit besteht bei dem bevorzugten Ausführungsbeispiel aus einem Motor, einem Getriebe und einem Kühler.

Um den Schwerpunkt des Vorsatzgerätes näher an das Traggestell zu rücken ist das Vorsatzgerät in einer Transportposition wenigstens teilweise in den Bereich der Lage der Kabine in Häckselbetriebposition verschwenkbar.

Weitere vorteilhafte Ausführungen sind Gegenstand weiterer Unteransprüche und werden nachfolgend an Hand eines in mehreren Figuren dargestellten Ausführungsbeispiels beschrieben.

Es zeigt:
- Fig.1: eine Seitenansicht des erfindungsgemäßen Feldhäckslers mit einem Teilschnitt durch die Funktionsbaugruppen;
- Fig.2: eine schematische Draufsicht auf einen erfindungsgemäßen Feldhäcksler mit ausgeklapptem Vorsatzgerät in Häckselbetriebposition;
- Fig.3: eine schematische Draufsicht auf einen erfindungsgemäßen Feldhäcksler mit eingeklapptem Vorsatzgerät in Straßenbetriebposition und
- Fig.4: eine Detailansicht einer zweiten Ausführungsform einer erfindungsgemäßen Schwenkvorrichtung in der Draufsicht.

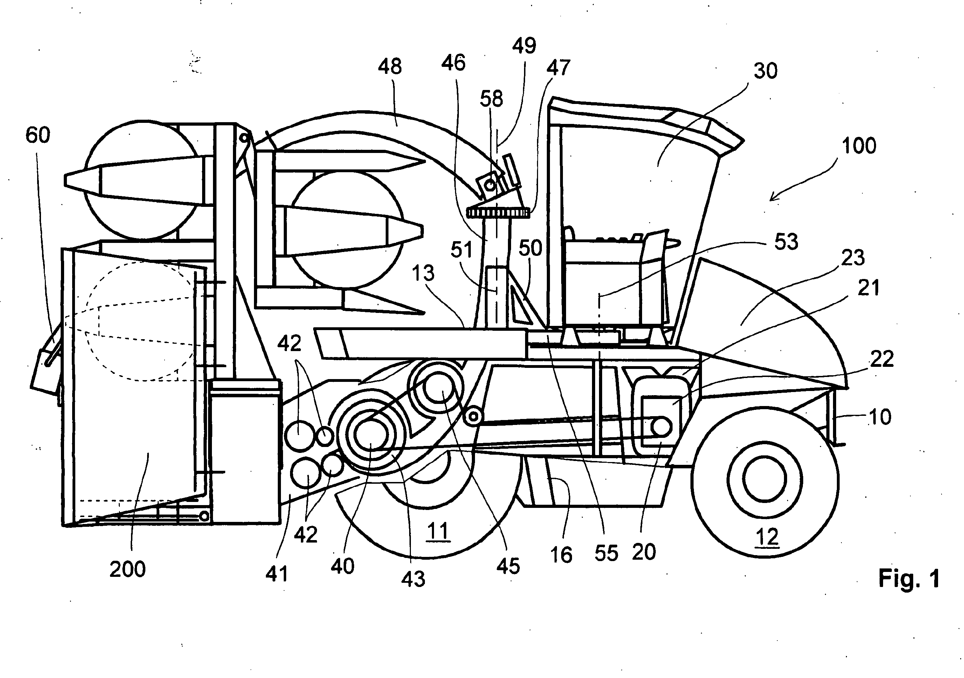

Der in Fig.1 dargestellte Feldhäcksler 100 zeigt ein Fahrgestell 10, auf dem eine Fahrerkabine 30 angebracht ist. Neben der Kabine 30 ist auf dem Fahrgestell 10 das obere Ende eines aufsteigenden Auswurfschachtes 46 angeordnet, der sich von einer Häckseltrommel 43 innerhalb des Fahrgestell 10 bis oberhalb des Fahrgestells 10 erstreckt. Die Fahrerkabine 30 steht in einer Straßenbetriebsposition 31 etwa mittig zwischen einer ersten Achseinheit 12 und dem Auswurfschacht 46, der Blick des Fahrers ist beim Steuern in Richtung der ersten Achseinheit 12 gerichtet. Die Fahrerkabine 30 ist auf einer Schwenkvorrichtung 50 angebracht, die um eine vertikale Drehachse 51 horizontal schwenkbar ist. Die Schwenkvorrichtung 50 ist als längenveränderlicher gerader Schwenkarm 55 ausgebildet, an dessen äußerem Ende die Fahrerkabine 30 um die vertikale Drehachse 53 drehbar gelagert ist. Die Drehachse 51 und die Schwenkvorrichtung 50 liegen vor dem Auswurfschacht, sodass beim Schwenken der Fahrerkabine 30 um 180° um den Auswurfschacht 46 herum weder die Fahrerkabine 30 noch die Schwenkvorrichtung 50 den Auswurfschacht 46 berühren bzw. einen Sicherheitsabstand unterschreiten.

Auf dem Auswurfschacht 46 ist ein mit einem Drehkranz 47 um eine vertikale Drehachse 49 drehbarer Auswurfkrümmer 48 angeflanscht, der zusätzlich um eine horizontale Achse 58 in der Höhe verstellbar ist. Der Auswurfkrümmer 48 ist in eine Straßenbetriebsposition 60 in Richtung einer weiteren Achseinheit 11 gestellt.

Das Fahrgestell 10 des Feldhäckslers wird von den beiden Achseinheiten 11, 12 getragen. Die erste Achseinheit 12 ist mit kleineren Rädern als die weitere Achseinheit 11 bestückt. In der Nähe der ersten Achseinheit 12 trägt das Fahrgestell 10 eine Antriebseinheit 20. Fig.1 zeigt die Antriebseinheit 20 im Teilschnitt, sie besteht aus einem Motor 21, einem Getriebe 22 und einem Kühlsystem 23. Der größte Anteil der Last der Antriebseinheit 20 ruht auf der ersten Achseinheit 12, wobei der Schwerpunkt der Antriebseinheit 20 sich durch die Anordnung des Motors 21 und des Getriebes 22 etwa in Höhe der ersten Achseinheit 12 befindet. Im Bereich der zweiten Achseinheit 11 ist eine Funktionsbaugruppe 40 untergebracht, die aus einem Einzugschacht 41 besteht, in dem mehrere Vorpresswalzen 42 drehbar gelagert sind, und die einen diesem Einzugschacht 41 nachgeordneten annähernd vertikal verlaufenden Auswurfschacht 46 beinhaltet, in dem nacheinander eine Häckseltrommel 43, ein nachgeschalteter Corn-Cracker (nicht dargestellt) und ein Nachbeschleuniger 45 angeordnet sind. Es liegt im Rahmen der Erfindung, dass dem Auswurfschacht 46 weitere nicht beschriebene Organe zugeordnet sein können.

Dem Einzugschacht 41 ist ein an sich bekanntes und ein an folgender Stelle noch näher erläutertes Vorsatzgerät 200 zugeordnet. Der größte Anteil der Lasten der Funktionsbaugruppe 40 und des Vorsatzgerätes 200 ruht auf der zweiten Achseinheit 11.

Das Vorsatzgerät 200 ist in eine Transportposition 220 zusammengeklappt und dabei teilweise über dem Traggestell 10 angeordnet.

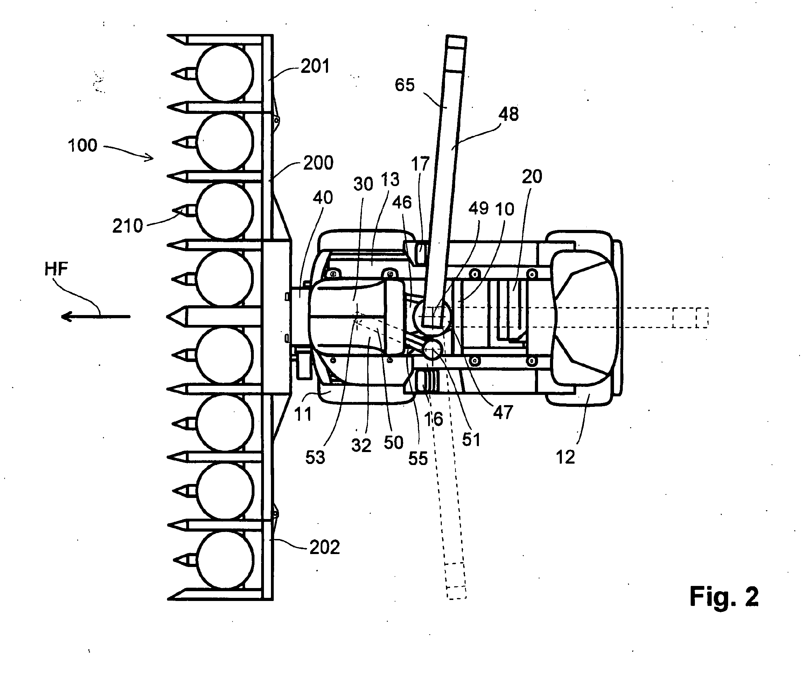

Fig.2 zeigt eine schematische Draufsicht des erfindungsgemäßen Feldhäckslers 100 mit einem reihenunabhängigen Vorsatzgerät 200.

Die Fahrerkabine 30 steht in einer Häckselbetriebposition 32 über der Achseinheit 11 und der Blick des Fahrers ist beim Steuern auf das Vorsatzgerät 200 gerichtet. Der Auswurfkrümmer 43 ist in eine Häckselbetriebposition 65 quer zur Längsachse des Feldhäckslers 100 gestellt, aus die er beim Häckseln um die Drehachse 49 gegen den Urzeigersinn um 180° Grad verdrehbar ist. Die Schwenkvorrichtung 50 und der Drehpunkt 51 sind neben dem Auswurfschacht 46 angeordnet.

Beim Positionswechsel der Fahrerkabine 30 und des Auswurfkrümmers 48 aus den Straßenbetriebspositionen 31, 60 in Häckselbetriebpositionen 32, 65 und beim Wechsel zurück werden die Fahrerkabine 30 und der Auswurfkrümmer 48 gleichsinnig um den Auswurfschacht 46 herum bewegt. Anschläge verhindern, dass die Fahrerkabine 30 und der Auswurfkrümmer 48 kollidieren. Die Bewegung der Fahrerkabine 30 und des Auswurfkrümmers 48 sind bei der Positionsänderung aneinander gekoppelt. Die Bewegungen werden beispielsweise über Sensoren elektronisch überwacht, die ihre ermittelten Daten an eine Auswerteeinheit weitergeben. Die Auswerteeinheit wertet die Daten aus und gibt z.B. durch Software unterstützt die Bewegungen für den Auswurfkrümmer 48 und die Fahrerkabine 30 vor.

Die Fahrerkabine 30 ist über einen Aufstieg 16 in der Nähe der Achseinheit 11 auf der rechten Seite des Feldhäckslers 100 erreichbar.

Das auseinandergeklappte Vorsatzgerät 200, das stirnseitig am Fahrgestell 10 vor den Einzugsschacht 41 montiert ist, befindet sich in einer Arbeitsposition 210. Das Vorsatzgerät 200 ragt über die Breite des Feldhäckslers 100 hinaus, er ist in dieser Position unterhalb der Tragebene 13 angeordnet. Der Schwerpunkt des parallel zur Achseinheit 11 liegenden auseinandergeklappten Vorsatzgerätes 200 liegt vor der Achseinheit 11 außerhalb des Fahrgestells 10.

Der auf dem Feld stehende Mais wird vom Vorsatzgerät 200 geschnitten und zum Einzugsschacht 41 transportiert, der Mais wird von der Funktionsbaugruppe 40 aufbereitet und das dabei entstehende Gut verlässt die Funktionsbaugruppe 40 über den Auswurfschacht 46. Der sich direkt an den Auswurfschacht 46 anschließende Auswurfkrümmer 48 leitet das Gut zum Überladen in die gewünschte Richtung.

Der Feldhäcksler 100 der Fig. 2 wird beim Ernten vorzugsweise in einer Häckselfahrtrichtung HF auf dem Feld gefahren, selbstverständlich kann der Feldhäcksler 100 zum Rangieren rückwärts, in die entgegengesetzte Richtung fahren.

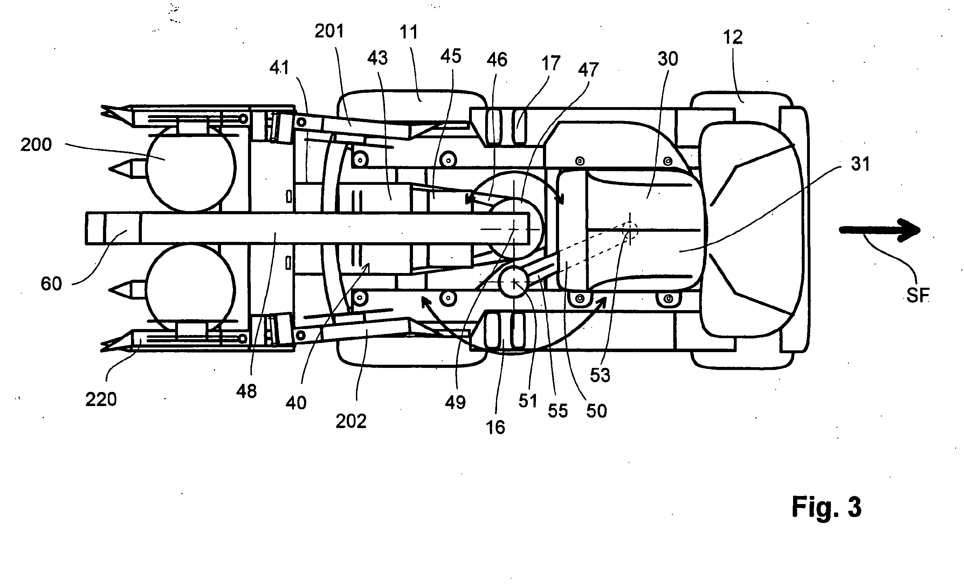

Fig.3 zeigt eine schematische Draufsicht des erfindungsgemäßen Feldhäckslers 100 mit einem reihenunabhängigen Vorsatzgerät 200 in einer hochgeklappten Transportposition 220. Der hochgeklappte Vorsatzgerät 200 ist schmaler als die größte Breite des Feldhäckslers 100.

Die Fahrerkabine 30 ist in der dargestellten Straßenbetriebposition über einen zweiten rechtsseitigen Aufstieg 17 erreichbar, der zwischen den Achseinheiten 11, 12 am Traggestell 10 angebracht ist.

Der Feldhäcksler 100 der Fig. 3 wird vorzugsweise in einer Straßenfahrtrichtung SF auf der Straße gefahren, selbstverständlich kann der Feldhäcksler 100 zum Rangieren rückwärts, in die entgegengesetzte Richtung fahren.

Der Wechsel von den Straßenbetriebpositionen 31, 60 in die Häckselbetriebpositionen 32, 65 erfolgt beim in Fig.2 und Fig.3 dargestelltem Feldhäcksler 100 im Uhrzeigersinn, der umgekehrte Wechsel der Positionen erfolgt gegen den Uhrzeigersinn.

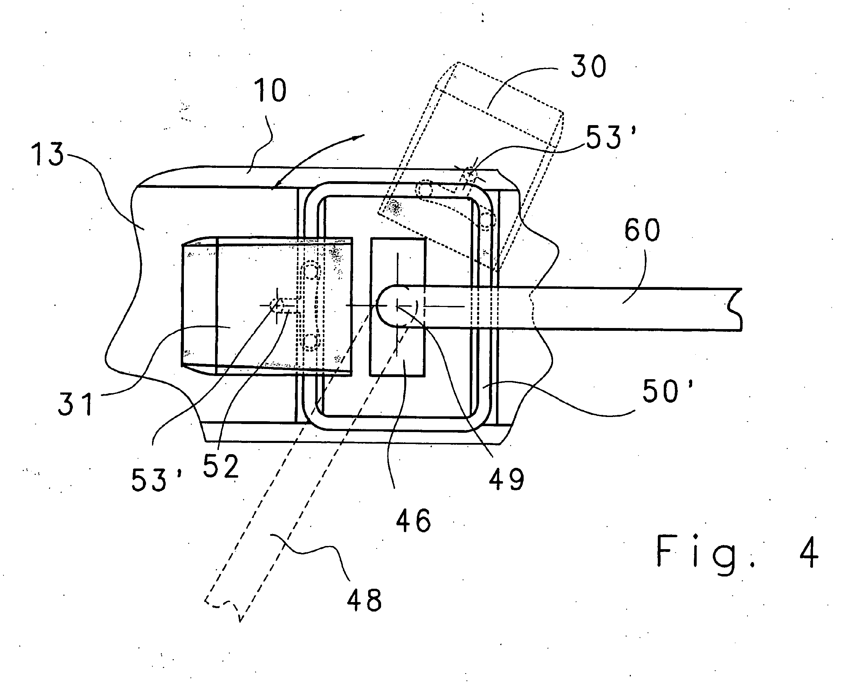

Fig. 4 zeigt eine zweite Ausführungsform der Schwenkvorrichtung 50'. Um den Auswurfschacht 46 ist auf der Fahrgestellebene 13 eine Verschiebeführung 50' angebracht, auf der die Fahrerkabine 30 über einen geraden Gelenkarm 52 angebracht ist. Der Gelenkarm 52 ist am inneren Ende in der Verschiebeführung 50'verschiebbar angebracht. Am äußeren Ende des Gelenkarms 52 ist die Fahrerkabine 30 um eine vertikale Drehachse 53' drehbar gelagert. Die Kabine 50 wird um einen Bewegungsmittelpunkt 51' verschwenkt, der mit der Drehachse 49 des Auswurfkrümmers koaxial ist. Diese Ausführungsform ermöglicht einen vollständigen teilweise rotatorischen und teilweise translatorischen Umlauf der Fahrerkabine 30 um den Auswurfschacht 46 herum.

Beim Betrieb auf der Straße in Straßenfahrtrichtung SF zeigt sich die Verteilung der Lasten und die Umkehr der Fahrtrichtung besonders beim Bremsen aus hohen Geschwindigkeiten als besonders nützlich. Bei starker Verzögerung aus hoher Geschwindigkeit verhindert das Gewicht der Achseinheit 11, der Funktionsbaugruppe 40 und des Vorsatzgerätes 200, dass die Achseinheit 11 des Feldhäcksler 100 von der Straße abhebt.

Es liegt im Rahmen der Erfindung, dass abweichend vom dargestellten Ausführungsbeispiel in den Fig. 1 bis 3 die Aufstiege 16, 17 spiegelbildlich am Traggestell 10 angebracht und die Bewegungsrichtungen der Kabine 30 und des Auswurfkrümmers 48 umgekehrt werden.

### Bezugszeichenliste:

- 100: Feldhäcksler
- 10: Fahrgestell
- 11: Erste Achseinheit
- 12: Weitere Achseinheit
- 16: Aufstieg
- 17: Aufstieg
- 20: Antriebseinheit
- 21: Motor
- 22: Getriebe
- 23: Kühlsystem
- 24: Arbeitsorgananordnung
- 30: Fahrerkabine

- 31: Straßenbetriebposition Fahrerkabine
- 32: Häckslerbetriebposition Fahrerkabine
- 40: Funktionsbaugruppe

- 41: Einzugschacht

- 42: Vorpresswalze
- 43: Häckseltrommel
- 44: Corn-Cracker
- 45: Nachbeschleuniger
- 46: Auswurfschacht
- 47: Drehkranz
- 48: Auswurfkrümmer
- 49: Drehachse
- 50: Schwenkvorrichtung
- 50': Verschiebeführung
- 51: Drehachse
- 51': Bewegungsmittelpunkt
- 52: Gelenkarm
- 53: Drehachse
- 53': Drehachse
- 55: Schwenkarm
- 60: Straßenbetriebposition Auswurfkrümmer
- 65: Häckselbetriebposition Auswurfkrümmer
- 200: Vorsatzgerät

- 210: Arbeitsposition Vorsatzgerät
- 220: Transportposition Vorsatzgerät
- SF: Straßenfahrtrichtung
- HF: Häckselfahrtrichtung

## Patentansprüche

1. Selbstfahrender Feidhäcksler (100) mit einer auf einem Fahrgestell (10) angeordneten Fahrerkabine (30) und einem sich von einer Häckseltrommel (43) innerhalb des Fahrgesteils (10) bis oberhalb des Fahrgestells (10) erstreckenden, aufsteigenden Auswurfschacht (46),
**dadurch gekennzeichnet, dass**
die Fahrerkabine (30) aus zumindest einer Straßenbetriebposition (31) in zumindest eine Häckselbetriebposition (32) und umgekehrt bewegbar ist und dass die Kabine (30) bei diesen Positionsänderungen wenigstens eine Arbeitsorgananordnung (24) umgreift, wobei-,
die Arbeitsorgananordnung (24) der Auswurfschacht (46) ist.

2. Selbstfahrender Feldhäckeler nach
Anspruch 1,
**dadurch gekennzeichnet, dass**
die Änderung der Positionen durch verschieben und/oder verschwenken der Kabine (30) erfolgt.

3. Selbstfahrender Feldhäcksler nach
Anspruch 1 oder 2,
**dadurch gekennzeichnet, dass**
die Schwenkvorrichtung (50) mit einem längenveranderlichen Schwenkarm (55) ausgestattet ist.

4. Selbstfahrender Feldhäcksler nach wenigstens einem der vorhergehenden Ansprüche 1 bis 3,
**dadurch gekennzeichnet, dass**
die Schwenkvorrichtung (50) eine Drehachse (61) aufweist, die außerhalb des Auswurfschachtes (46) angeordnet ist.

5. Seibstfahrender Feldhäcksler nach wenigstens einem der vorhergehenden
Ansprüche 1 bis 4,
**dadurch gekennzeichnet, dass**
die Fahrerkabine (30) in der Häckselbetriebposition (32) und in der Straßenbetriebaposition (31) über Aufstiege (16, 17) erreichbar ist, die am Fahrgestell (10) angeordnet sind.

6. Selbstfahrender Feld häcksler nach wenigstens einem der vorhergehenden Ansprüche 1 bis 5,
**dadurch gekennzeichnet, dass**
ein auf dem Auswurfschacht (46) angeflanschter Auswurfkrümmer (48) um eine horizontale Achse (58) höhenverschwenkbar Ist.

7. Selbstfahrender Feldhäcksler nach wenigstens einem der vorhergehenden Ansprüche 1 bis 6,
**dadurch gekennzeichnet, dass**
der Auswurfkrümmer (48) aus einer Häckselbetriebposition (65) in eine Straßenbetriebposition (60) bewegbar ist.

8. Selbstfahrender Feldhäcksler nach wenigstens einem der vorhergehenden Ansprüche 1 bis 7,
**dadurch gekennzeichnet, dass**
die Fahrerkabine (30) und der Auswurfkrümmer (48) glelchsinnig um den Auswurfschacht (46) positionierbar sind.

9. Selbstfahrender Feldhäckeler nach wenigstens einem der vorhergehenden Ansprüche 1 bis 8,
**dadurch gekennzeichnet, dass**
die Bewegung der Fahrerkabine (30) und die Bewegung des Auswurfkrümmers (48) aneinander gekoppelt sind.

10. Selbstfahrender Feldhäcksler nach wenigstens einem der vorhergehenden Ansprüche 1 bis 9,
dadurch gekennzelchnet, dass
die Bewegung des Auswurfkrümmer (48) in horizontaler und/oder vertikaler Richtung durch Anschläge begrenzt wird.

11. Selbstfahrender Feldhäcksler nach wenigstens einem der vorhergehenden Ansprüche 1 bis 10,
**dadurch gekennzeichnet, dass**
die Fahrerkabine (30) in der Straßenbetriebposition (31) etwa mittig zwischen den Achseinheiten (11, 12) angeordnet ist.

12. Selbstfahrender Feldhäcksler nach wenigstens einem der vorhergehenden Ansprüche 1 bis 11,
**dadurch gekennzeichnet, dass**
die Fahrerkabine (30) neben dem Auswurfschacht (46) angeordnet ist.

13. Selbstfahrender Feldhäcksler nach wenigstens einem der vorhergehenden Ansprüche 1 bis 12,
**dadurch gekennzeichnet, dass**
die Kabine (30) auf einer Verschiebeführung (50') verschlebilch befestigt ist und dabei um eine vertikale Drehachse (63') schwenkbar gelagert Ist.

14. Selbstfahrender Feldhäcksler nach wenigstens einem der vorhergehenden Ansprüche 1 bis 13,
**dadurch gekennzeichnet, dass**
die Drehachse (49) des Auswurfkrümmers (48) und der Bewegungsmittelpunkt (61') der Verschiebevorrichtung (50') koaxial sind.

15. Selbstfahrender Feldhäcksler nach wenigstens einem der vorhergehenden Ansprüche 1 bis 14,
**dadurch gekennzeichnet, dass**
zwischen der Verschiebeführung (60') und der Fahrerkabine (30) ein Gelenkarm (52) angelenkt ist.

## Claims

1. A self-propelled forage harvester (100) comprising a driver's cab (30) arranged on a chassis (10) and a rising ejection shaft (46) extending from a chopping drum (43) within the chassis (10) to above the chassis (10),
**characterised in that** the driver's cab (30) is movable from at least one on-road operating position (31) into at least one chopping operating position (32) and vice-versa and the cab (30) embraces at least one working member arrangement (24) upon said changes in position, wherein the working member arrangement (24) is the discharge shaft (46).

2. A self-propelled forage harvester according to claim 1 **characterised in that** the change in position is effected by displacement and/or pivotal movement of the cab (30).

3. A self-propelled forage harvester according to claim 1 or claim 2 **characterised in that** the pivoting apparatus (50) is equipped with a variable-length pivotal arm (55).

4. A self-propelled forage harvester according to at least one of preceding claims 1 to 3 **characterised in that** the pivoting apparatus (50) has an axis of rotation (51) arranged outside the ejection shaft (46).

5. A self-propelled forage harvester according to at least one of preceding claims 1 to 4 **characterised in that** the driver's cab (30) can be reached in the chopping operating position (32) and in the on-road operating position (31) by way of climbing means (16, 17) arranged on the chassis (10).

6. A self-propelled forage harvester according to at least one of preceding claims 1 to 5 **characterised in that** a discharge bend member (48) which is flange-mounted on the discharge shaft (46) is pivotable in respect of height about a horizontal axis (58).

7. A self-propelled forage harvester according to at least one of preceding claims 1 to 6 **characterised in that** the discharge bend member (48) is movable from a chopping operating position (65) into an on-road operating position (60).

8. A self-propelled forage harvester according to at least one of preceding claims 1 to 7 **characterised in that** the driver's cab (30) and the discharge bend member (48) can be positioned in the same direction around the discharge shaft (46).

9. A self-propelled forage harvester according to at least one of preceding claims 1 to 8 **characterised in that** the movement of the driver's cab (30) and the movement of the discharge bend member (48) are coupled to each other.

10. A self-propelled forage harvester according to at least one of preceding claims 1 to 9 **characterised in that** the movement of the discharge bend member (48) is limited by abutments in the horizontal and/or vertical direction.

11. A self-propelled forage harvester according to at least one of preceding claims 1 to 10 **characterised in that** the driver's cab (30) is arranged approximately centrally between the axle units (11, 12) in the on-road operating position (31).

12. A self-propelled forage harvester according to at least one of preceding claims 1 to 11 **characterised in that** the driver's cab (30) is arranged beside the discharge shaft (46).

13. A self-propelled forage harvester according to at least one of preceding claims 1 to 12 **characterised in that** the cab (30) is fixed displaceably on a displacement guide (50') and **in that** case is mounted pivotably about a vertical axis of rotation (53').

14. A self-propelled forage harvester according to at least one of preceding claims 1 to 13 **characterised in that** the axis of rotation (49) of the discharge bend member (48) and the centre point of movement (51') of the displacement apparatus (50') are coaxial.

15. A self-propelled forage harvester according to at least one of preceding claims 1 to 14 **characterised in that** a joint arm (52) is pivotably mounted between the displacement guide (50') and the driver's cab (30).

## Revendications

1. Ramasseuse-hacheuse (100) automotrice comportant une cabine de conducteur (30) disposée sur un châssis (10) et un puits d'éjection (46) ascendant s'étendant depuis un tambour de hachoir (43) à l'intérieur du châssis (10) jusqu'au-dessus du châssis (10),
**caractérisée en ce que**
la cabine du conducteur (30) peut être déplacée depuis au moins une position de fonctionnement sur route (31) dans au moins une position de fonctionnement en mode de hachage (32) et inversement, et **en ce que** la cabine (30) saisit lors de ces changements de position au moins un ensemble d'organes de travail (24), sachant que l'ensemble d'organes de travail (24) est le puits d'éjection (46).

2. Ramasseuse-hacheuse automotrice selon la revendication 1,
**caractérisée en ce que**
la modification des positions s'effectue en coulissant et/ou en pivotant la cabine (30).

3. Ramasseuse-hacheuse automotrice selon la revendication 1 ou 2,
**caractérisée en ce que**
le dispositif de pivotement (50) est équipé d'un bras de pivotement (55) à longueur variable.

4. Ramasseuse-hacheuse automotrice selon au moins l'une quelconque des revendications 1 à 3,
**caractérisée en ce que**
le dispositif de pivotement (50) présente un axe de rotation (51) qui est disposé à l'extérieur du puits d'éjection (46) .

5. Ramasseuse-hacheuse automotrice selon au moins l'une quelconque des revendications précédentes 1 à 4, **caractérisée en ce que**
la cabine du conducteur (30) peut être atteinte dans la position de fonctionnement en mode de hachage (32) et dans la position de fonctionnement sur route (31) par l'intermédiaire de montées (16, 17), qui sont disposées au niveau du châssis (10).

6. Ramasseuse-hacheuse automotrice selon au moins l'une quelconque des revendications précédentes 1 à 5, **caractérisée en ce**
**qu'**une goulotte d'éjection (48) fixée par brides sur le puits d'éjection (46) peut pivoter en hauteur autour d'un axe horizontal (58).

7. Ramasseuse-hacheuse automotrice selon au moins l'une quelconque des revendications précédentes 1 à 6, **caractérisée en ce que**
la goulotte d'éjection (48) peut être déplacée depuis une position de fonctionnement en mode de hachage (65) dans une position de fonctionnement sur route (60).

8. Ramasseuse-hacheuse automotrice selon au moins l'une quelconque des revendications précédentes 1 à 7, **caractérisée en ce que**
la cabine du conducteur (30) et la goulotte d'éjection (48) peuvent être positionnées dans le même sens autour du puits d'éjection (46).

9. Ramasseuse-hacheuse automotrice selon au moins l'une quelconque des revendications 1 à 8,
**caractérisée en ce que**
le déplacement de la cabine du conducteur (30) et le déplacement de la goulotte d'éjection (48) sont couplés l'un sur l'autre.

10. Ramasseuse-hacheuse automotrice selon au moins l'une quelconque des revendications 1 à 9,
**caractérisée en ce que**
le déplacement de la goulotte d'éjection (48) est limité par des butées dans la direction horizontale et/ou dans la direction verticale.

11. Ramasseuse-hacheuse automotrice selon au moins l'une quelconque des revendications 1 à 10,
**caractérisée en ce que**
la cabine du conducteur (30) est disposée dans la position de fonctionnement sur route (31) à peu près au milieu entre les unités d'axe (11, 12).

12. Ramasseuse-hacheuse automotrice selon au moins l'une quelconque des revendications 1 à 11,
**caractérisée en ce que**
la cabine du conducteur (30) est disposée à côté du puits d'éjection (46).

13. Ramasseuse-hacheuse automotrice selon au moins l'une quelconque des revendications 1 à 12,
**caractérisée en ce que**
la cabine (30) est fixée de manière à pouvoir être déplacée par coulissement sur un dispositif de guidage de coulissement (50') et est logée dans ce cadre de manière à pouvoir pivoter autour d'un axe de rotation (53') vertical.

14. Ramasseuse-hacheuse automotrice selon au moins l'une quelconque des revendications précédentes 1 à 13, **caractérisée en ce que**
l'axe de rotation (49) de la goulotte d'éjection (48) et le point central de déplacement (51') du dispositif de déplacement par coulissement (50') sont coaxiaux.

15. Ramasseuse-hacheuse automotrice selon au moins l'une quelconque des revendications précédentes 1 à 14, **caractérisée en ce**
**qu'**un bras articulé (52) est articulé entre le dispositif de guidage par coulissement (50') et la cabine du conducteur (30).
